(19) Europäisches Patentamt
European Patent Office
Office européen des brevets

(11) **EP 4 557 544 A1**

(12) **EUROPEAN PATENT APPLICATION**

(43) Date of publication:
21.05.2025 Bulletin 2025/21

(21) Application number: 23210743.3

(22) Date of filing: 17.11.2023

(51) International Patent Classification (IPC):
*H02H 3/38* (2006.01)    *H02H 3/44* (2006.01)

(52) Cooperative Patent Classification (CPC):
H02H 3/382; H02H 3/44

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
- **NAIDU, Obbalareddi Demudu**
**560087 Bangalore (IN)**
- **VENKATESAN, Aarthi**
**600099 Chennai (IN)**

(74) Representative: **Vossius & Partner**
**Patentanwälte Rechtsanwälte mbB**
**Siebertstraße 3**
**81675 München (DE)**

(54) **IDENTIFYING FAULT DIRECTION FOR POWER NETWORKS CONNECTED WITH INVERTER-BASED RENEWABLE RESOURCES**

(57) The invention provides a method for determining a fault direction value in a power transmission line relative to a device connected within the power transmission line, the method comprising: obtaining a current signal; and determining a fault direction value based on the current signal and a derivative of the current signal for identifying a fault direction based on the fault direction value.

Fig. 1

**Description**

The present disclosure relates to a method for determining a fault direction value in a power transmission line relative to a device connected within the power transmission line, an according computer program product and an according device.

Large-scale integration of renewable energy sources is taking place due to environmental concerns. With the integration of the inverter-based resources (IBRs), the fault voltage and currents are modulated due to which voltage and current angles may shift. The angle/phase shift may affect the conventional line protection principles using local end information such as line distance and directional protection. The directional relay algorithms are classified into time-domain, frequency domain, and time-frequency domain-based methods. The frequency-domain-based methods depend on the phase shift polarizing quantity (reference) and operating quantity (current).

The positive, negative, and zero sequence-based methods require the positive, negative, and zero sequence voltage as polarizing quantity and positive, negative, and zero sequence current during a fault, respectively, as the operating quantity to determine the direction of a fault (see J. Roberts, and A. Guzman,"Directional element design and evaluation," 2006). The positive sequence-based methods may not work well for lines connected with IBRs as abnormal phase angle shifts are introduced by converter controls. The negative and zero sequence-based directional elements may not work for full converter-based renewable resources as these systems are not provided with negative sequence currents due to converter feedforward compensation. Moreover, the negative and zero sequence-based directional methods require source impedances. The source impedances of the IBR-connected systems are varied during the fault continuously which may result in the mal-operation of these methods. Therefore, there is need for new fault direction detection methods which can address the above challenges introduced by inverter based renewable resources.

Most of the relay manufacturers use phasor-based fault directional methods, which require voltage and current signals (see J. Roberts, and A. Guzman,"Directional element design and evaluation," 2006). These traditional methods may not work for lines connected with inverter-based renewable resources. To mitigate the issues due to renewable integration, only current-based methods using time domain approach are proposed. The fault direction is determined by comparing the generated reference signal with the fault current signal. The success of the method depends on correct reference signal generation which depends on the fault inception and current zero-crossing time The zero-crossing detection is not easy and is impacted by the fault inception time, transients and DC offset present in the fault signals. The phase difference between the pre-fault and fault current is used to determine the direction of the fault (see A. K. Pradhan, A. Routray, and S. M. Gudipalli, "Fault direction estimation in radial distribution system using phase change in sequence current," IEEE Trans. Power Del., vol. 22, no. 4, pp. 2065-2071, 2007). The performance of the method requires power flow direction, and it is suitable for radial lines. A review of the existing literature reveals that the existing voltage-based polarizing quantity directional elements depend on voltage, current angle and source impedances information which might not be reliable for IBRs as source impedance of IBR is continuously vary with time. Therefore, there is a need for simple and reliable fault direction detection method for lines connected with inverter based renewable resources.

Hence, a solution is necessary, because the traditional fault direction methods do not perform as expected, especially when applied to inverter-based resources.

The present disclosure relates to a method for determining a fault direction value in a power transmission line relative to a device connected within the power transmission line, the method comprising: obtaining a current signal; and determining a fault direction value based on the current signal and a derivative of the current signal for identifying a fault direction based on the fault direction value.

This disclosure may be used for fault direction detection for power networks connected to IBRs. The relay measured local end current (and potentially also voltage) may be used to identify the fault direction. It does not need any line or source impedances as settings. The disclosed fault direction detection may use single ended current (and potentially also voltage) signals without using source and line impedances. The disclosed fault direction may be detected by only using measured current and its derivative. The reliability of the fault direction detection may not be affected by inverter control types (grid codes), and/or location of the integration (i.e., connected one end or both ends of the line).

This disclosure may lead to, inter alia, the following benefits: It does not require any information related to the IBR control strategy and/or parameters, which are generally proprietary and not readily shared by the manufacturers. The proposed solution is agnostic to the control structure, source impedance and parameters of the IBR. It does not require source and line impedances (and/or source impedances) as settings. It is independent on the power flow direction. While it is often referred to IBRs as energy source, the disclosure may also be applied at systems with another kind of energy source.

A fault direction may be determined based on the value of the fault direction value. The fault direction may be relative to the device connected within the power transmission line. The device may be connected within the power transmission line in such a way that there is a first part of the power transmission line coupled to the device on one side and a second part of the power transmission line coupled to the device on the other side. The device may be one of a substation, terminal, busbar (bus/ bus system), and relay. Below, when the relay is mentioned, the device may be meant as an alternative.

In accordance with different embodiments, the method can be implemented for power transmission lines connecting to a device. However, it may be possible to extend this to other power transmission lines which have more devices. As an example, a resulting power transmission system (short: system; which may comprise the power transmission line, the device, and preferably a power source) can be a three-phase system. The power source can represent an IBR, another transmission lines, a combination of a transmission line(s), a reactor(s) and / or a load(s), or a combination of various power sources / sub-systems. The method may be automatically performed. The method may be a computer-implemented method.

The method may further comprise detecting an event associated with a disturbance in one of the power transmission lines or associated with current injection at the device (like a trigger to do calculations). For example, the event can be a disturbance such as a fault on the power transmission line. For example, the event is a fault at the terminal or bus. For example, the event is switching (on/off) of a shunt element. Examples of the shunt element include, but are not limited to, a reactor, a capacitor, and a load.

The term derivative of a signal (like of the current signal) generally means the first differentiation by time (d/dt), if not otherwise defined.

Various embodiments may preferably implement the following features.

Preferably, the current signal comprises current phase signals of two or more phases of the power transmission line, and the derivative of the current signal comprises derivatives of corresponding current phase signals.

The number of phases (two or more) may correspond to the number of phases in the system (for example a three-phase system) and/or in the power transmission line. There may be two phases, or three phases, or more than three phases. A number of current phase signals may correspond to the number of phases. A number of derivatives of (corresponding) current phase signals may correspond to the number of current phase signals.

Preferably, the method comprises further: pre-processing of the current phase signals and derivatives of the current phase signals by: subtracting an angle of a first voltage phase signal of the two or more voltage phase signals from all current phase signals; and subtracting the angle of the first voltage phase signal from all derivatives of the current phase signals.

Values may be expressed as phasors (especially for the calculations done): $A \times e^{i(\omega t + \Phi)}$, where A is an amplitude, $\omega$ (often also "w") is an angular frequency, and $\phi$ a phase angle. If the angular frequency is 0 (because there is no change in angle over time), only the phase angle remains as angular part of the phasor. When the phrase "angle of" a value is used, the phase angle $\phi$ of that value is meant, if not otherwise specified. The (real part of the) phasor may also be expressed as $A \times \cos(\omega t + \Phi)$.

Preferably, determining the fault direction value comprises: determining a reference signal by an average of angles of the derivative of the current signal, the derivative of the current signal comprising a positive derivative of the current signal and a negative derivative of the current signal.

The current signal (in this example in three phases) seen by the device may be represented as:

$$I_a(t) = I_{maxa}(t)\cos(\omega t + \Phi_A)$$

$$I_b(t) = I_{maxb}(t)\cos(\omega t + \Phi_A - 120)$$

$$I_c(t) = I_{maxc}(t)\cos(\omega t + \Phi_A - 240)$$

The positive differentiation of the current signal for each phase can be defined as:

$$+I'_{abc}(k) = \frac{1}{2\omega\Delta T}\left(I_{abc}(k+1) - I_{abc}(k-1)\right)$$

The negative differentiation of the current signal for each phase can be defined as:

$$+I'_{abc}(k) = \frac{1}{2\omega\Delta T}\left(I_{abc}(k-1) - I_{abc}(k+1)\right)$$

Where $\omega = 2\pi f$, k is the sample number, $\Delta T = \frac{1}{N \times f}$, f is the system frequency and N is the number of samples per cycle. The positive sequence component of the current signal ($I_a$, $I_b$, $I_c$), positive differentiated current signal $\left(+I'_a, +I'_b, +I'_c\right)$ and negative differentiated current signal $\left((-I'_a, -I'_b, -I'_c\right)$ are computed and are denoted as $I_{F1}, +I'_{F1}$ and $-I'_{F1}$ respectively.

The reference signal (or reference current) $I_{Ref}$ may be calculated by an average of angles of the derivative of the current signal, the derivative of the current signal comprising a positive derivative of the current signal and a negative derivative of the current signal:

$$I_{Ref} = \left( \frac{(\angle + I'_{F1} + \angle - I'_{F1})}{2} \right)$$

Where $\angle$ represents "angle of". Alternatively, the reference signal may be calculated by further multiplying a magnitude of the current signal (or of one current phase signal $I_{F1}$) to it, as shown here:

$$I_{Ref} = |I_{F1}| \left( \frac{(\angle + I'_{F1} + \angle - I'_{F1})}{2} \right)$$

Preferably, determining the fault direction value comprises: determining the fault direction value by subtracting an angle of the reference signal with an angle of the current signal.

The fault direction value D may be calculated by:

$$D = \left( \angle I_{Ref} - \angle I_{F1} \right)$$

Alternatively, the fault direction value D may be calculated by:

$$D = |I_{F1}| \angle \left( \angle I_{Ref} - \angle I_{F1} \right)$$

Preferably, the method comprises further: determining that a fault direction is forward if the fault direction value is between -45° and +45°, and determining that the fault direction is reverse if the fault direction value is between -225° and -135°.

The terms "forward fault" and "reverse fault" refer to a direction in the power transmission line (forward and reverse) relative to the device, in which (direction) the fault is. If the fault is detected as a forward fault, it may be in a first direction relative to the device (first part of the power transmission line). If the fault is detected as a reverse fault, it may be in a second direction (different from the first direction) relative to the device (second part of the power transmission line).

Preferably, determining the fault direction value is not based on a line impedance of the power transmission line and/or a source impedance of the power transmission line.

The method may not require any information related to the IBR control strategy and/or parameters. The method may not need information about the control structure, source impedance and parameters of the IBR. The method may not require source and line impedances (and/or source impedances). The method may be independent on the power flow direction.

Preferably, determining the current signal comprises measuring the current signal from one or more single ended current signals.

A single ended current signal is a signal transmitting an electrical signal, in the form of varying voltage, over one wire while the other wire is grounded. This may be cost-efficient to implement.

Alternatively, the current signal may be measured by the current signal from a differential signal. Differential signaling transmits electrical signals using two complementary signals, each in its own conductor. The receiver responds to the electrical difference between the two signals. Differential signaling may be more noise immune and is less effected by EMI (extra magnetic interference).

Preferably, the current signal is a plurality of current measurements at different times. This plurality of current measurements at different times may provide data for a data plot (or graph) of the current signal over time.

Preferably, the method further comprises determining whether a magnitude of a positive sequence voltage is bigger than a threshold. This may filter for signals which are week and are poor for calculating.

The present disclosure also relates to a computer program product comprising instructions which, when the program is executed by a computer, cause the computer to carry out the before mentioned method.

The present disclosure also relates to a device for determining a fault direction value in a power transmission line relative to the device connected within the power transmission line, the device comprising: a data acquisition unit configured to obtain a current signal; and a determination unit configured to determine a fault direction value based on the current signal and a derivative of the current signal for identifying a fault direction based on the fault direction value.

The data acquisition unit and the determination unit may be one or more processors configured to execute the corresponding steps.

Preferably, the device comprises a relay configured to connect the device with the power transmission line.

The present disclosure also relates to a system comprising the before mentioned device, an inverter-based resource, IBR, a first part of the power transmission line coupled to the device on one side and the IBR on another side, and a second part of the power transmission line coupled to the device on one side and a grid on another side.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.

Fig. 1 is an exemplary (power transmission) system.

Fig. 2a shows a flowchart for data pre-processing and fig. 2b shows a flowchart of a method of the disclosure. Fig. 2c shows a flowchart of an alternative method.

Figs. 3a and 3b show two exemplary (power transmission) systems.

Figs. 4 to 7 show an exemplary implementation of the system of fig. 3a with example signals and values.

Figs. 8 to 11 show an exemplary implementation of the system of fig. 3b with example signals and values.

Fig. 12 shows another exemplary implementation of the system.

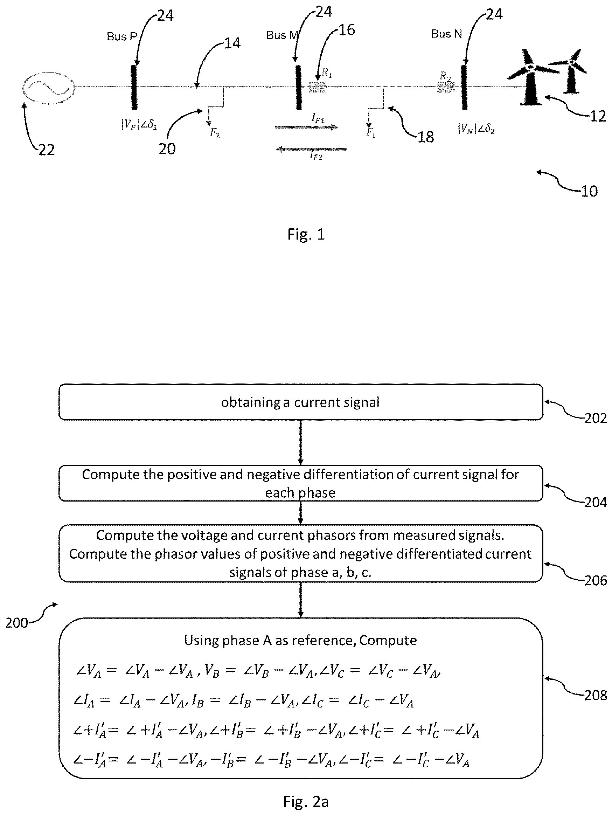

Fig. 1 shows an exemplary (power transmission) system 10 comprising an energy source 12 (in this case IBRs), a power transmission line 14, a relay 16, a forward fault 18, a reverse fault 20, an equivalent source or transmission grid 22, and three bus systems 24.

The disclosure may identify the fault direction using single ended current (and potentially voltage) measurements and it does not require the source and line impedances. The disclosure is explained using 3 bus system.

The relay 16 ($R_1$) is positioned between the forward fault 18 in a forward direction and the reverse fault 20 in a reverse direction. The relay 16 is connected within the power transmission line 14 in such a way that there is a first part of the power transmission line coupled to the relay 16 on one side (for example the side with the forward fault 18) and a second part of the power transmission line coupled to the relay 16 on another side (for example the side with the reverse fault 20). The relay 16 may measure a current signal. It may additionally measure a voltage signal. There is a second relay ($R_2$) shown, which may be omitted.

The device mentioned in this disclosure may be the relay 16. Other examples for the device may be a substation, a terminal, or a bus. If the "device 16" is mentioned, it may be this relay 16 or another example mentioned or some other device suitable.

The energy source 12 is connected to the power transmission line 14. The transmission grid 22 is connected to the power transmission line 14. The transmission grid 22 can be a combination of other power system equipment or sub-systems, or a combination of network lines. For example, the equivalent source can represent grouping of one or more of a transmission line, power generator, transformer, reactor, and/or load, or other such combinations.

Basis for the method of this disclosure shall be derived now.

Considering the forward fault 18 $F_1$ and the reverse fault 20 $F_2$ for analysis. The obtained (input) current signal (in a case of three phases: a b and c) seen by the relay 16 $R_1$ can be represented as:

$$i_a(t) = i_{maxa}(t)\cos(wt + \emptyset_A)$$

$$i_b(t) = i_{maxb}(t)\cos(wt + \emptyset_A - 120) \tag{1}$$

$$i_c(t) = i_{maxc}(t)\cos(wt + \emptyset_A - 240)$$

In step 204, positive and negative differentiation of the current signal for each phase (current phase signal) is computed.

The positive differentiation of the current signal for each phase can be defined as:

$$+i'_{abc}(k) = \frac{1}{2w\Delta T}\left(i_{abc}(k+1) - i_{abc}(k-1)\right) \tag{2}$$

Similarly, the negative differentiation of the current signal for each phase can be defined as:

$$+i'_{abc}(k) = \frac{1}{2w\Delta T}\left(i_{abc}(k-1) - i_{abc}(k+1)\right) \tag{3}$$

Where $w = 2\pi f$, k is the sample number, $\Delta T = \frac{1}{Nxf}$, f is the system frequency and N is the number of samples per cycle.

The (positive sequence component of) (input) current (phase) signal(s) ($I_a$, $I_b$, $I_c$), positive differentiated current (phase) signal(s) $(+I'_a, +I'_b, +I'_c)$ and negative differentiated current (phase) signal(s) $((-I'_a, -I'_b, -I'_c)$ are computed and are denoted as $I_{F1}, +I'_{F1}$ and $-I'_{F1}$ respectively.

Similarly positive sequence component of input voltage signal ($V_a$, $V_b$, $V_c$), may be computed and may be denoted as $V_{F1}$.

Considering impedance between the left bus 24 P to the forward fault 18 $F_1$ is $Z_{PF1}$ and between the right bus 24 N to the reverse fault 20 $F_2$ is $Z_{NF2}$ which are defined as below

$$Z_{PF1} = Z_{PF1}\angle\theta_1 \; ; Z_{NF2} = Z_{NF2}\angle\theta_2 \tag{4}$$

The method is derived for forward and reverse faults as follows in two cases (case 1: forward fault and case 2: reverse fault):

Case 1: Forward fault:

In this case, the fault 18 $F_1$ is analyzed. The fault 18 $F_1$ is forward fault for the relay 16 $R_1$.

From fig.1, (post fault) current signal is calculated as in equation (5)

$$I_{F1} = \frac{|V_P|\angle\delta}{Z_{PF1}|\angle\theta_1} = |I_{F1}|(\delta_1 - \theta_1) \tag{5}$$

Positive and negative derivative of $I_{F1}$ is given as in (6) and (7) respectively

$$+I'_{F_1} = |I_{F'_1}|\angle\left(\delta_1 - \theta_1 + \frac{\pi}{2}\right) \tag{6}$$

$$-I'_{F_1} = |I_{F'_1}|\angle\left(\delta_1 - \theta_1 + \frac{3\pi}{2}\right) = |I_{F'_1}|\angle\left(\delta_1 - \theta_1 - \frac{\pi}{2}\right) \tag{7}$$

The angle part (of the phasor) of the value shall be presented between -180° (-π) and 180° (+π).

The reference current is calculated using (6) and (7) as in (8) (wherein the amplitude of the current signal ($|I_{F_1}|$)

may be ignored for the method, as show later):

$$I_{Ref} = |I_{F1}| \left( \frac{(\angle + I'_{F1} + \angle - I'_{F1})}{2} \right) = |I_{F1}| \angle (\delta_1 - \theta_1) \qquad (8)$$

The fault directional index (D) is obtained by define a new phasor using (5) and (8)

$$D = |I_{F1}| \angle (\angle I_{Ref} - \angle I_{F1}) \qquad (9)$$

$$\boldsymbol{D_{Forward}} = |\boldsymbol{I_{F1}}| \angle (\boldsymbol{+0}) \qquad (10)$$

Case 2: Reverse fault:

In this case the fault 20 $F_2$ is analysed. $F_2$ is Reverse fault for the relay 16 $R_1$.
From Fig.1, post fault current is calculated as in (11)

$$I_{F2} = \frac{|V_N| \angle \delta_2}{Z_{NF2} | \angle \theta_2} = |I_{F2}| (\delta_2 - \theta_2 + \pi) \qquad (11)$$

Positive and negative derivative of $I_{F2}$ is given as in (12) and (13) respectively

$$+I'_{F_2} = |I'_{F_2}| \angle \left( \delta_2 - \theta_2 + \frac{3\pi}{2} \right) = |I'_{F_2}| \angle \left( \delta_2 - \theta_2 - \frac{\pi}{2} \right) \qquad (12)$$

$$-I'_{F_2} = |I'_{F_2}| \angle \left( \delta_2 - \theta_2 + \frac{\pi}{2} \right) \qquad (13)$$

The reference current is calculated using (12) and (13) as in (14) (again, the amplitude of the current signal ($|I_{F2}|$) may be ignored for the method)

$$I_{Ref} = |I_{F2}| \left( \frac{(\angle + I'_{F2} + \angle - I'_{F2})}{2} \right) = |I_{F2}| \angle (\delta_2 - \theta_2) \qquad (14)$$

The fault directional index is obtained by define a new phasor using (14) and (11)

$$D = |I_{F2}| \angle (\angle I_{Ref} - \angle I_{F2}) \qquad (15)$$

$$\boldsymbol{D_{Reverse}} = |\boldsymbol{I_{F2}}| \angle (\boldsymbol{-\pi}) \qquad (16)$$

From these two cases, it can be seen that the fault direction index (or fault direction value) has a value of 0° (in an ideal case) if the fault is in forward direction. The fault direction value has a value of -180° (-π) if the fault is in reverse direction.

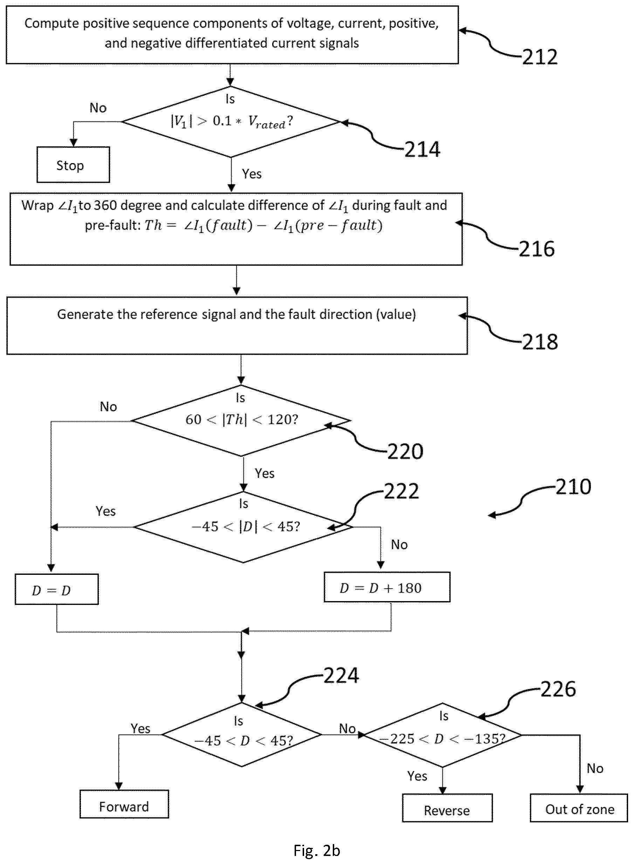

Fig. 2a shows a flowchart for data pre-processing method 200 and fig. 2b shows a flowchart of a method 210 of the disclosure. These methods will be described with reference to the system 10 of fig. 1. The methods are also applicable to other systems.
In step 202, a current signal is obtained. The current signal may be measured by the relay 16. The current signal may represent the current on the power transmission line 14. Additionally, a voltage signal may be obtained (measured). Step 202 may be alternatively, may comprise, or may be comprised by measuring instantaneous voltage and current signals. The current (phase) signal(s) may be as in equation (1) above.
In step 204, positive and negative differentiation of the current signal for each phase (current phase signal) are computed. This may be as equations (2) (for positive differentiation) and (3) (for negative differentiation) above.
In step 206, the voltage and current phasors from the measured signals are computed. Further, the phasor values of positive and negative differentiated current signals of phase a, b, c may be computed.

In step 208, the current phase signals and derivatives of the current phase signals are preprocessed by: subtracting an angle of a first voltage phase signal of the two or more voltage phase signals from and current phase signals and subtracting the angle of the first voltage phase signal from all derivatives of the current phase signals. This may be calculated as follows:

$$\angle I_A = \angle I_A - \angle V_A, I_B = \angle I_B - \angle V_A, \angle I_C = \angle I_C - \angle V_A$$

$$\angle + I_A' = \angle + I_A' - \angle V_A, \angle + I_B' = \angle + I_B' - \angle V_A, \angle + I_C' = \angle + I_C' - \angle V_A$$

$$\angle - I_A' = \angle - I_A' - \angle V_A, -I_B' = \angle - I_B' - \angle V_A, \angle - I_C' = \angle - I_C' - \angle V_A$$

It is also possible to additionally subtract the angle of the first voltage phase signal from all voltage phase signals, as follows:

$$\angle V_A = \angle V_A - \angle V_A, V_B = \angle V_B - \angle V_A, \angle V_C = \angle V_C - \angle V_A,$$

Fig. 2b shows a flowchart of a method 210 of the disclosure. Here, $I_1$ denotes the current signal, $V_1$ denotes positive sequence fault voltage and D denotes the computed directionality index (= fault direction value). The method may require instantaneous current samples to generate the reference signal and positive sequence voltage angle as input to compute the direction of the fault for the relay (fault direction value).

In step 212, positive sequence components of voltage, current, positive, and negative differentiated current signals are computed. This may comprise the method 200 of fig. 2a.

In step 214, it is determined whether a magnitude of a positive sequence voltage is bigger than a threshold. This may filter for signals which are week and are poor for calculating. This step is optional. The comparison, whether the magnitude of the positive sequence voltage is bigger than the threshold, may be as follows:

If

$$|V_1| > 0.1 * V_{rated}, => \text{continue}$$

If

$$|V_1| < 0.1 * V_{rated}, => \text{stop}$$

In step 216, $<I_1$ is wrapped to 360° (degree or $2\pi$) and a difference of $<I_1$ is calculated between fault and pre-fault: $Th= <I_1$ (*fault*)- $<I_1$ (*pre-fault*).

Wrapping $<I_1$ to 360 degree may be done by adjusting $<I_1$ to the same angle in the range of - 180° (-$\pi$) to +180° (+$\pi$) (for example 370° would be wrapped to 10°).

In step 218, a reference signal and (subsequently) a fault direction value is generated. The reference signal (or reference current) $I_{Ref}$ may be calculated by an average of angles of the derivative of the current signal, the derivative of the current signal comprising a positive derivative of the current signal and a negative derivative of the current signal:

$$I_{Ref} = \left( \frac{(\angle + I_1' + \angle - I_1')}{2} \right)$$

Where < represents "angle of". Alternatively, the reference signal may be calculated by further multiplying a magnitude of the current signal (or of one current phase signal $I_1$) to it, as shown here:

$$I_{Ref} = |I_1| \left( \frac{(\angle + I_1' + \angle - I_1')}{2} \right)$$

The fault direction value D may be calculated by:

$$D = \left( \angle I_{Ref} - \angle I_1 \right)$$

Alternatively, the fault direction value D may be calculated by:

$$D = |I_1| \angle \left( \angle I_{Ref} - \angle I_1 \right)$$

Summarizing the calculation of the fault directional index D with the calculation of the $I_{ref}$, the fault directional index D may be calculated by

$$D = |I_F| \angle \left[ \angle \left( |I_F| \left( \frac{\angle + I'_F + \angle - I'_F}{2} \right) \right) - \angle I_F \right],$$

Or

$$D = \angle \left[ \angle \left( |I_F| \left( \frac{\angle + I'_F + \angle - I'_F}{2} \right) \right) - \angle I_F \right],$$

where < is the "angle of", $I_F$ is the current signal, and $I'_F$ is the time derivative of the current signal.

In step 220, the absolute value of Th is compared to thresholds. If 60 < |*Th*| < 120 then continue to step 224. Else, continue to step 222.

In step 222, the angle (integer value) of the fault direction value D is compared to thresholds. If -45 > zD > 45 , 180 is added to D (numbers may be degrees (angle)). Else, D remains the same. In either case, it is continued to step 224.

In steps 224 and 226, the (angle of the) fault direction value is compared to thresholds. If -45 < *<D* < 45 - 45 < *<D* < 45, the fault is a forward fault. If -225 < *<D* < -135 (numbers may be in degrees (angle)), the fault is a reverse fault. Else, a problem message may be displayed to a user.

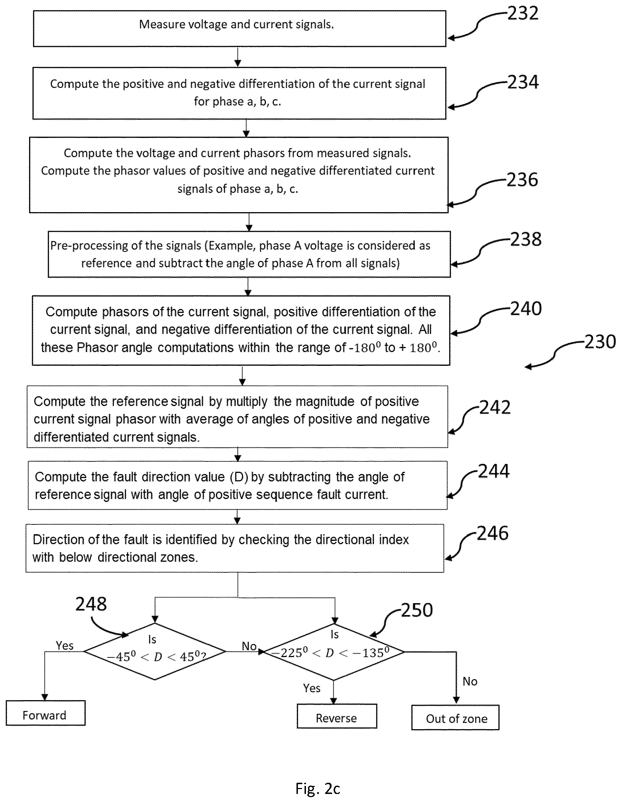

Fig. 2c shows an alternative method 230. In step 232, voltage and current signals may be measured. This step may be similar to (comprise, be exchanged with) step 202. In step 234, the positive and negative differentiation of fault current signal for phase a, b, c are computed. This step may be similar to step 204. In step 236, the voltage and current phasors from measured signals may be computed. The phasor values of positive and negative differentiated current phase signals (a, b, c) may also be computed. In step 238, the signals may be preprocessed (Example, phase A voltage is considered as reference and subtract the angle of phase A from all signals). This step may be similar to step 208. Steps 232 to 238 may be similar to steps 202 to 208.

In step 240, phasor of current signal, positive differentiation of the current signal, and negative differentiation of the current signal may be computed. All these Phasor angle computations may be wrapped within the range of -180° to + 180°. Steps 238 and 240 may be in a swapped order.

In step 242, the reference signal may be computed by multiplying the magnitude of positive sequence fault current phasor with average of angles of positive and negative differentiated fault currents. This step may be similar to the part of step 218 in which the reference signal is computed.

In step 244, the fault direction value (D) may be computed by subtracting the angle of reference signal with angle of positive sequence fault current. This step may be similar to the part of step 218 in which the fault direction value is computed.

In step 246, a direction of the fault may be identified by checking the fault direction index with directional zones. This may be done as shown in steps 248 and 250. Steps 248 and 250 may be similar to steps 224 and 226.

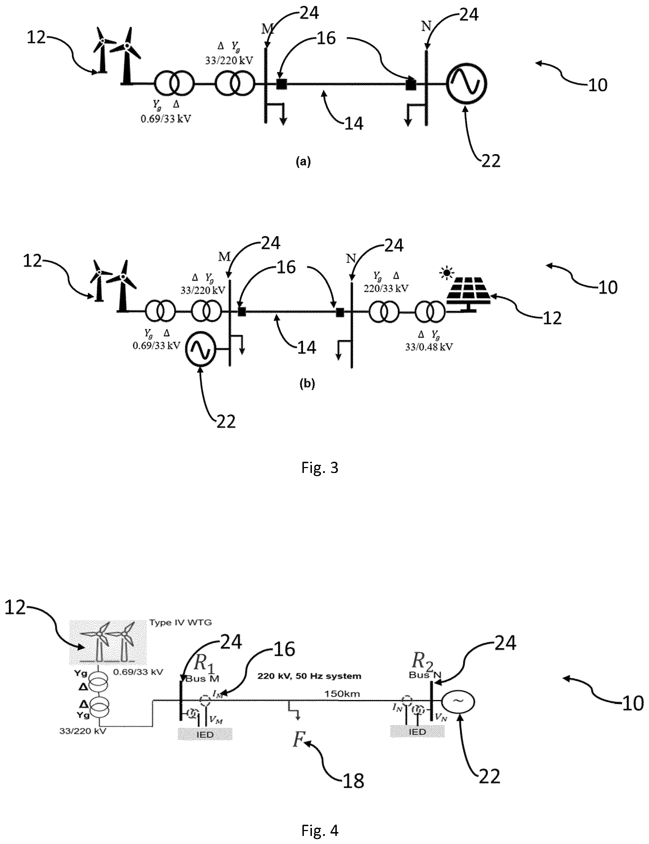

Figs. 3a and 3b show two exemplary (power transmission) systems 10. The system 10 of fig. 3a comprises an IBR 12 (windmills) at one end and the other end connected to a transmission grid 22. The system 10 of fig. 3a further comprises relays 16, bus systems 24, a power transmission line 14.

The system 10 of fig. 3b comprises IBRs 12 on both sides (windmills and solar panel) and a connection to a transmission grid 22. The system 10 of fig. 3b further comprises relays 16, bus systems 24, a power transmission line 14.

Figs. 4 to 7 show an exemplary implementation of the system 10 of fig. 3a with example signals and values. For simplicity, it shall be assumed that the relays 16 ($R_1$ and $R_2$) are located at the same position as the corresponding bus 24 (which is closest to the corresponding relay 16). The relays 16 may also be comprised by the corresponding bus 24. The power transmission line 14 may be a 220kV, 150km long power transmission line 14.

A fault 18 may be at 50% of the Line length with a resistance of $R_F$=50Ω. The fault may be an AG fault. The fault 18 may be at 50% (75km) from Bus 24 M of the power transmission line 14 with IBR 12 as shown in Fig 4, IBR 12 is modelled using North American grid code. In general (also for other examples and embodiments), other grid codes may be used too.

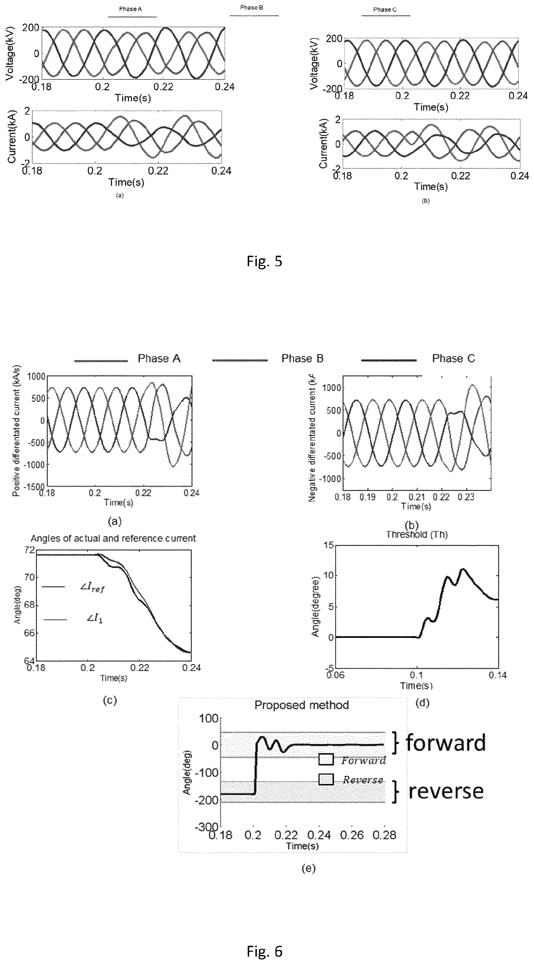

The voltage and current signal measured at (the relays at) Bus M 24 ($R_1$) and Bus N 24 ($R_2$) are shown in fig. 5 (for three phases; fig. 5a shows for $R_1$ and fig. 5b shows for $R_2$). The current magnitude is limited and modulated for IBR connected cases as shown in fig. 5.

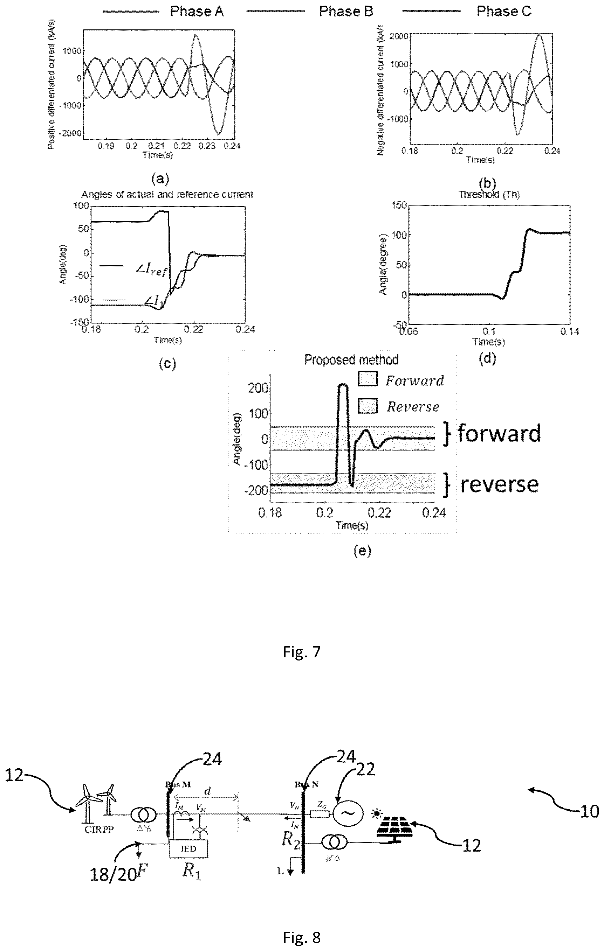

The Threshold ($<I_1(fault) - <I_1 (pre - fault)$) for relay $R_1$ and $R_2$ are shown in fig.6(d) and fig.7(d) respectively. The positive differentiation of the input current samples for both relays $R_1$ and $R_2$ are as shown in fig.6(a) and fig.7(a). The negative differentiation of the input current samples for both relays $R_1$ and $R_2$ are as shown in fig.6(b) and fig.7(b). The angle of the reference signal computed using equation (8) and angle of positive sequence current is shown in fig.6(c) for $R_1$ and in fig.7(c) for $R_2$. The fault direction computed by proposed method for both relays $R_1$ and $R_2$ as shown in fig.6(d) and fig.7(d) respectively. The computed angle at each step is summarized for both relay $R_1$ and $R_2$ is summarized in Table 1 and direction is identified as forward for both relays $R_1$ and $R_2$.

The values (for the example shown in figs. 4 to 7) are also shown in table 1 below (with $I_{ref} = \dfrac{(\angle + I'_{F2} + \angle - I'_{F2})}{2}$ and $D = (<I_{Ref} - <I_{F2})$):

| Relay | $V_1$ | $\angle I_{F_1}$ | $\angle + I'_{F_1}$ | $\angle - I'_{F_1}$ | $I_{ref}$ | $D$ | $D$ after Th check | Direction of the fault |
|---|---|---|---|---|---|---|---|---|
| R1 | 165.05<64.05 | 821.5<62.34 | 152.48 | - 27.52 | 62.48 | 0.149 | 0.149 | forward |
| R2 | 171.6SLS8.04 | 394.67< - 36.51 | 53.89 | - 126.1 | -36.141 | 0.399 | 0.399 | forward |

Figs. 8 to 11 show an exemplary implementation of the system 10 of fig. 3b with example signals and values. For simplicity, it shall be assumed that the relays 16 ($R_1$ and $R_2$) are located at the same position as the corresponding bus 24 (which is closest to the corresponding relay 16). The relays 16 may also be comprised by the corresponding bus 24.

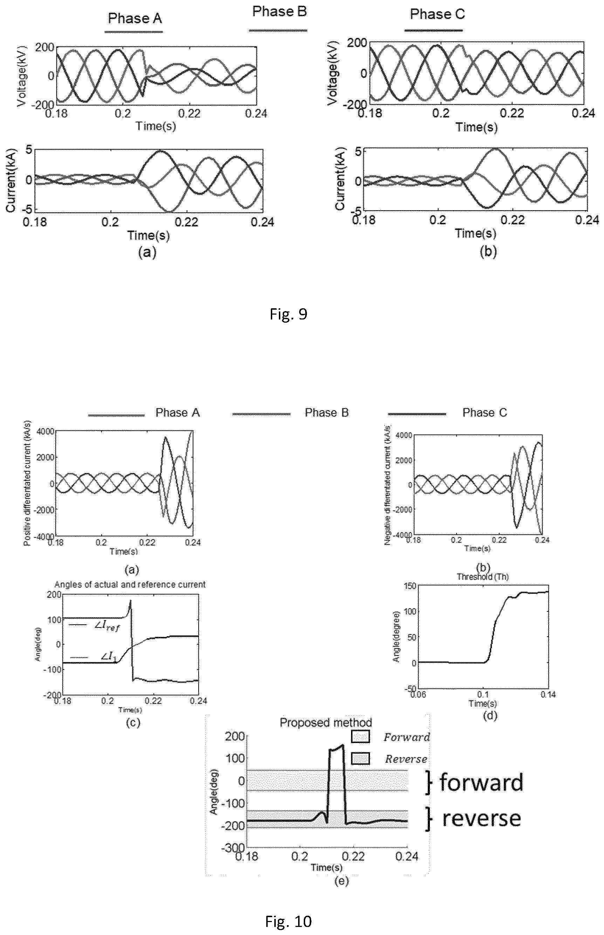

The Fault may be on Bus M with a resistance RF=10Ω. This fault may be a BCG fault. The voltage and current signal measured at Bus M ($R_1$) and Bus N ($R_2$) are shown in fig. 9 (fig. 9a for $R_1$ and fig. 9b for $R_2$). The current magnitude is limited and modulated for IBR connected system as shown in fig.9.

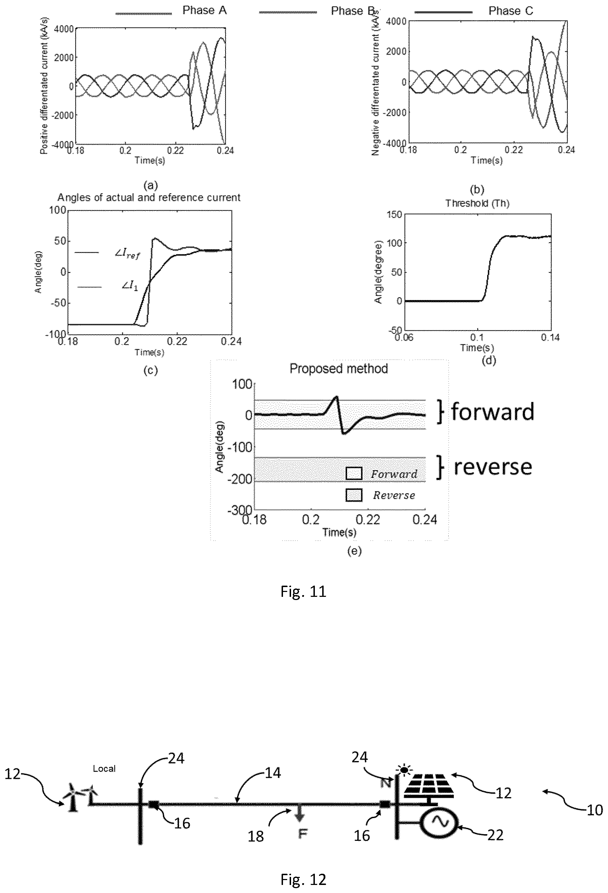

The Threshold ($<I_1(fault) - <I_1(pre - fault)$) for relay $R_1$ and $R_2$ are shown in fig.10(d) and fig.11(d), respectively. The positive differentiation of the input current samples for both relays $R_1$ and $R_2$ are as shown in fig.10(a) and fig.11(a). The negative differentiation of the input current samples for both relays $R_1$ and $R_2$ are as shown in fig.10(b) and fig.11(b). The angle of the reference signal computed using equation (8) and angle of positive sequence current is shown in fig.10(c) for $R_1$ and in fig.11(c) for $R_2$. The fault direction computed by the proposed method for both relay $R_1$ and $R_2$ as shown in fig.10(d) and fig.11(d), respectively. The computed angle at each step is summarized for both relays $R_1$ and $R_2$ in Table 2 and the fault direction is identified as reverse for relay $R_1$ and forward for relay $R_2$.

The values (for the example shown in figs. 8 to 11) are also shown in table 2 below (with $I_{ref} = \dfrac{(\angle + I'_{F2} + \angle - I'_{F2})}{2}$ and $D = (<I_{Ref} - <I_{F2})$):

| Relay | $V_1$ | $I_{F_1}$ | $\angle + I'_{F_1}$ | $\angle - I'_{F_1}$ | $I_{ref}$ | $D$ | $F$ after Th check | Direction of the fault |
|---|---|---|---|---|---|---|---|---|
| R1 | 72.36<45.14 | 821< - 145.8 | -55.9 | 124.09 | 34.09 | 179.9 = -180.1 | -180 | reverse |
| R2 | 137.6<92.41 | 3428.1<34.29 | 125.25 | -54.74 | 35.26 | -0.04 | -0.04 | forward |

The performance of the existing directional methods and the proposed method are analyzed for the test system in fig.3(a) (and/or fig. 4), and it was observed that the proposed method is 100% reliable for both windfarm end and grid end. A comparison of the performance of existing directional methods (positive, negative, zero) and proposed method (of this disclosure) is tabulated in Table 3 and 4 for more cases. The existing negative and zero sequence based methods are not applicable for three phase and non-grounded faults. This is denoted with NA (not applicable) in Table 3 and 4. The results from both IBR and grid end are provided. The proposed method provides the accurate results from the grid end relay and IBR end relay.

Table 3, below, shows performance comparison of existing directional methods and the proposed directional method (windfarm end):

| Test Case | Actual | Positive | Negative | Zero | Proposed |
|---|---|---|---|---|---|
| Ag fault at 10% (15km), Rf 0.01Ω | Forward | Forward | Forward | Forward | Forward |
| AB fault at 50% (75km), Rf 0.01Ω | Forward | Forward | NA | NA | Forward |
| ABC fault at 84% (126km), Rf 0.01Ω | Forward | Forward | NA | NA | Forward |
| Ag fault at 10% (15km), Rf 10Ω | Forward | Forward | Reverse | Reverse | Forward |
| AB fault at 50% (75km), Rf 10Ω | Forward | Forward | NA | NA | Forward |
| ABC fault at 84% (126km), Rf 10Ω | Forward | Reverse | NA | NA | Forward |
| BCg fault at 24% (36km), Rf 0.01Ω | Forward | Forward | Reverse | Reverse | Forward |
| Ag fault at 64% (96km), Rf 0.01Ω | Forward | Forward | Reverse | Reverse | Forward |
| ABC fault at 90% (135km), Rf 0.01Ω | Forward | Forward | NA | NA | Forward |
| BCg fault at 24% (36km), Rf 10Ω | Forward | Reverse | Reverse | Reverse | Forward |
| Ag fault at 64% (96km), Rf 10Ω | Forward | Forward | Reverse | Reverse | Forward |
| ABC fault at 90% (135km), Rf 10Ω | Forward | Reverse | NA | NA | Forward |

Table 4, below, shows performance comparison of existing directional methods and the proposed directional method (Grid end):

| Test Case | Actual | Positive | Negative | Zero | Proposed |
|---|---|---|---|---|---|
| Ag fault at 16% (24km), Rf 0.01Ω | Forward | Forward | Forward | Forward | Forward |
| AB fault at 24% (36km), Rf 0.01Ω | Forward | Forward | NA | NA | Forward |
| ABC fault at 76% (114km), Rf 0.01Ω | Forward | Forward | NA | NA | Forward |
| Ag fault at 16% (24km), Rf 10Ω | Forward | Forward | Forward | Forward | Forward |
| AB fault at 24% (36km), Rf 10Ω | Forward | Reverse | NA | NA | Forward |
| ABC fault at 76% (114km), Rf 10Ω | Forward | Reverse | NA | NA | Forward |
| BCg fault at 10% (15km), Rf 0.01Ω | Forward | Forward | Forward | Forward | Forward |
| Ag fault at 50% (75km), Rf 0.01Ω | Forward | Forward | Forward | Forward | Forward |
| ABC fault at 84% (126km), Rf 0.01Ω | Forward | Forward | NA | NA | Forward |
| BCg fault at 10% (15km), Rf10Ω | Forward | Forward | Forward | Forward | Forward |
| AB fault at 50% (75km), Rf 10Ω | Forward | Forward | Forward | Forward | Forward |
| ABC fault at 84% (84km), Rf 10Ω | Forward | Reverse | NA | NA | Forward |

Fig. 12 shows another exemplary implementation of the system 10. The (power transmission) system 10 comprising two energy sources 12 (in this case IBRs), a power transmission line 14, relays 16, a fault 18 an equivalent source or transmission grid 22, and two bus systems 24.

The proposed method is tested for different fault locations and fault resistances for the system shown in fig. 12. The results are tabulated in table 5 and 6. The existing negative and zero sequence based methods are not applicable for three phase and non-grounded faults. This is denoted with NA (not applicable) in Table 5 and 6. From the tables, the proposed method provides the superior results compared to existing method for this test system.

Table 5, below, shows performance comparison of existing directional methods and the proposed directional method (Local end)

| Test Case | Actual | Positive | Negative | Zero | Proposed |
|---|---|---|---|---|---|
| Ag fault at 5% (7.5km), Rf 0.01Ω | Forward | Forward | Reverse | Forward | Forward |
| AB fault at 36% (54km), Rf 0.01Ω | Forward | Forward | NA | NA | Forward |

(continued)

| Test Case | Actual | Positive | Negative | Zero | Proposed |
|---|---|---|---|---|---|
| ABC fault at 50% (75km), Rf 0.01Ω | Forward | Reverse | NA | NA | Forward |
| Ag fault at 5% (7.5km), Rf 10Ω | Forward | Forward | Reverse | Reverse | Forward |
| AB fault at 36% (54km), Rf 10Ω | Forward | Forward | NA | NA | Forward |
| ABC fault at 50% (75km), Rf 10Ω | Forward | Reverse | NA | NA | Forward |
| BCg fault at 5% (7.5km), Rf 0.01Ω | Forward | Forward | Reverse | Reverse | Forward |
| Ag fault at 36% (54km), Rf 0.01Ω | Forward | Forward | Reverse | Reverse | Forward |
| ABC fault at 50% (75km), Rf 0.01Ω | Forward | Reverse | NA | NA | Forward |
| BCg fault at 5% (7.5km), Rf 10Ω | Forward | Reverse | Reverse | Reverse | Forward |
| Ag fault at 36% (54km), Rf 10Ω | Forward | Forward | Reverse | Reverse | Forward |
| ABC fault at 50% (75km), Rf 10Ω | Forward | Reverse | NA | NA | Forward |

Table 6, below, shows performance comparison of existing directional methods and the proposed directional method (Remote end)

| Test Case | Actual | Positive | Negative | Zero | Proposed |
|---|---|---|---|---|---|
| Ag fault at 5% (7.5km), Rf 0.01Ω | Forward | Forward | Reverse | Forward | Forward |
| AB fault at 36% (54km), Rf 0.01Ω | Forward | Forward | NA | NA | Forward |
| ABC fault at 50% (75km), Rf 0.01Ω | Forward | Forward | NA | NA | Forward |
| Ag fault at 5% (7.5km), Rf 10Ω | Forward | Forward | Reverse | Reverse | Forward |
| AB fault at 36% (54km), Rf 10Ω | Forward | Forward | NA | NA | Forward |
| ABC fault at 50% (75km), Rf 10Ω | Forward | Reverse | NA | NA | Forward |
| BCg fault at 5% (7.5km), Rf 0.01Ω | Forward | Forward | Forward | Forward | Forward |
| Ag fault at 36% (54km), Rf 0.01Ω | Forward | Forward | Forward | Forward | Forward |
| ABC fault at 50% (75km), Rf 0.01Ω | Forward | Forward | NA | NA | Forward |
| BCg fault at 5% (7.5km), Rf 10Ω | Forward | Reverse | Reverse | Reverse | Forward |
| Ag fault at 36% (54km), Rf 10Ω | Forward | Forward | Reverse | Reverse | Forward |
| ABC fault at 50% (75km), Rf 10Ω | Forward | Reverse | NA | NA | Forward |

In conclusion, a method identifying the fault direction for power networks (connected to IBR systems) is disclosed. As can be seen in the tables above, the proposed method provides the reliable fault direction. The proposed method does not require source impedances and line impedances. Therefore, the method is independent on the IBR type. The method can be implemented in any control or relay hardware.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for determining a fault direction value in a power transmission line relative to a device connected within the power transmission line, the method comprising:

   obtaining a current signal; and
   determining a fault direction value based on the current signal and a derivative of the current signal for identifying a fault direction based on the fault direction value.

2. Method according to claim 1, wherein the current signal comprises current phase signals of two or more phases of the power transmission line, and the derivative of the current signal comprises derivatives of corresponding current phase signals.

3. Method according to claim 2, further comprising:
   pre-processing of the current phase signals and derivatives of the current phase signals by:

   subtracting an angle of a first voltage phase signal of the two or more voltage phase signals from all current phase signals; and
   subtracting the angle of the first voltage phase signal from all derivatives of the current phase signals.

4. Method according to any one of claims 1 to 3, wherein determining the fault direction value comprises:
   determining a reference signal by an average of angles of the derivative of the current signal, the derivative of the current signal comprising a positive derivative of the current signal and a negative derivative of the current signal.

5. Method according to claim 4, wherein determining the fault direction value comprises:
   determining the fault direction value by subtracting an angle of the reference signal with an angle of the current signal.

6. Method according to claim 5, further comprising:
   determining that a fault direction is forward if the fault direction value is between -45° and +45°, and determining that the fault direction is reverse if the fault direction value is between -225° and -135°.

7. Method according to any one of claims 1 to 6, wherein determining the fault direction value is not based on a line impedance of the power transmission line and/or a source impedance of the power transmission line.

8. Method according to any one of claims 1 to 7, wherein determining the current signal comprises measuring the current signal from one or more single ended current signals

9. Method according to any one of claims 1 to 8, wherein the current signal is a plurality of current measurements at different times.

10. Computer program product comprising instructions which, when the program is executed by a computer, cause the computer to carry out the method of any of claims 1 to 9.

11. A device for determining a fault direction value in a power transmission line relative to the device connected within the power transmission line, the device comprising:

a data acquisition unit configured to obtain a current signal;
a determination unit configured to determine a fault direction value based on the current signal and a derivative of the current signal for identifying a fault direction based on the fault direction value.

12. Device of claim 11, wherein the device comprises a relay configured to connect the device with the power transmission line.

13. A system comprising the device of claim 11 or 12, an inverter-based resource, IBR, a first part of the power transmission line coupled to the device on one side and the IBR on another side, and a second part of the power transmission line coupled to the device on one side and a grid on another side.

Fig. 1

Using phase A as reference, Compute

$$\angle V_A = \angle V_A - \angle V_A, V_B = \angle V_B - \angle V_A, \angle V_C = \angle V_C - \angle V_A,$$

$$\angle I_A = \angle I_A - \angle V_A, I_B = \angle I_B - \angle V_A, \angle I_C = \angle I_C - \angle V_A$$

$$\angle +I'_A = \angle +I'_A - \angle V_A, \angle +I'_B = \angle +I'_B - \angle V_A, \angle +I'_C = \angle +I'_C - \angle V_A$$

$$\angle -I'_A = \angle -I'_A - \angle V_A, -I'_B = \angle -I'_B - \angle V_A, \angle -I'_C = \angle -I'_C - \angle V_A$$

Fig. 2a

Compute positive sequence components of voltage, current, positive, and negative differentiated current signals — 212

Is $|V_1| > 0.1 * V_{rated}$? — 214

No → Stop

Yes →

Wrap $\angle I_1$ to 360 degree and calculate difference of $\angle I_1$ during fault and pre-fault: $Th = \angle I_1(fault) - \angle I_1(pre - fault)$ — 216

Generate the reference signal and the fault direction (value) — 218

Is $60 < |Th| < 120$? — 220

No →

Yes →

Is $-45 < |D| < 45$? — 222

— 210

Yes →

No →

$D = D$

$D = D + 180$

Is $-45 < D < 45$? — 224

Is $-225 < D < -135$? — 226

Yes → Forward

No →

Yes → Reverse

No → Out of zone

Fig. 2b

Measure voltage and current signals. ⟵ 232

Compute the positive and negative differentiation of the current signal for phase a, b, c. ⟵ 234

Compute the voltage and current phasors from measured signals. Compute the phasor values of positive and negative differentiated current signals of phase a, b, c. ⟵ 236

Pre-processing of the signals (Example, phase A voltage is considered as reference and subtract the angle of phase A from all signals) ⟵ 238

Compute phasors of the current signal, positive differentiation of the current signal, and negative differentiation of the current signal. All these Phasor angle computations within the range of $-180^0$ to $+180^0$. ⟵ 240

⟵ 230

Compute the reference signal by multiply the magnitude of positive current signal phasor with average of angles of positive and negative differentiated current signals. ⟵ 242

Compute the fault direction value (D) by subtracting the angle of reference signal with angle of positive sequence fault current. ⟵ 244

Direction of the fault is identified by checking the directional index with below directional zones. ⟵ 246

248

Is $-45^0 < D < 45^0$? — Yes → Forward — No →

250

Is $-225^0 < D < -135^0$ — Yes → Reverse — No → Out of zone

Fig. 2c

17

12

Δ $Y_g$
33/220 kV

M ⌐24

16

N ⌐24

$Y_g$ Δ
0.69/33 kV

14

10

22

(a)

12

M ⌐24

16

N ⌐24

Δ $Y_g$
33/220 kV

$Y_g$ Δ
220/33 kV

10

12

$Y_g$ Δ
0.69/33 kV

14

Δ $Y_g$
33/0.48 kV

22

(b)

Fig. 3

12

Type IV WTG

$R_1$
Bus M

⌐24

16

220 kV, 50 Hz system

$R_2$
Bus N

⌐24

Yg
Δ

0.69/33 kV

$I_M$

$V_M$

150km

$I_N$

$V_N$

10

Δ
Yg

33/220 kV

IED

F

IED

22

18

Fig. 4

Fig. 5

Fig. 6

Fig. 7

Fig. 8

Phase A    Phase B    Phase C

Fig. 9

Fig. 10

Fig. 11

Fig. 12

**EUROPEAN SEARCH REPORT**

Europäisches Patentamt
European Patent Office
Office européen des brevets

Application Number

EP 23 21 0743

## DOCUMENTS CONSIDERED TO BE RELEVANT

| Category | Citation of document with indication, where appropriate, of relevant passages | Relevant to claim | |
|---|---|---|---|
| X | US 5 572 138 A (NIMMERSJOE GUNNAR [SE]) 5 November 1996 (1996-11-05) | 1,2,4-7, 10,11 | **CLASSIFICATION OF THE APPLICATION (IPC)** |
| Y | * column 2, lines 25-67; figure 1 * | 13 | INV.<br>H02H3/38<br>H02H3/44 |
| X | EP 2 741 390 A1 (SCHNEIDER ELECTRIC IND SAS [FR]) 11 June 2014 (2014-06-11) * paragraphs [0008], [0029] - [0031]; figures 1, 2A * | 1,3,7-12 | |
| Y | US 2022/308103 A1 (KASZTENNY BOGDAN Z [CA]) 29 September 2022 (2022-09-29) * paragraphs [3453] - [0059]; figure 1 * | 13 | |

**TECHNICAL FIELDS SEARCHED (IPC)**

H02H
G01R

The present search report has been drawn up for all claims

| Place of search | Date of completion of the search | Examiner |
|---|---|---|
| Munich | 7 May 2024 | Colombo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 21 0743

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2024

| Patent document cited in search report | | Publication date | Patent family member(s) | | Publication date |
|---|---|---|---|---|---|
| US 5572138 | A | 05-11-1996 | DE | 69413067 T2 | 29-04-1999 |
| | | | EP | 0738433 A1 | 23-10-1996 |
| | | | US | 5572138 A | 05-11-1996 |
| | | | WO | 9519060 A1 | 13-07-1995 |
| EP 2741390 | A1 | 11-06-2014 | CN | 103852691 A | 11-06-2014 |
| | | | EP | 2741390 A1 | 11-06-2014 |
| | | | ES | 2535750 T3 | 14-05-2015 |
| | | | RU | 2013154085 A | 10-06-2015 |
| | | | UA | 118952 C2 | 10-04-2019 |
| US 2022308103 | A1 | 29-09-2022 | EP | 4064488 A1 | 28-09-2022 |
| | | | US | 2022308103 A1 | 29-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. ROBERTS** ; **A. GUZMAN**. *Directional element design and evaluation*, 2006

- **A. K. PRADHAN** ; **A. ROUTRAY** ; **S. M. GUDIPALLI**. Fault direction estimation in radial distribution system using phase change in sequence current. *IEEE Trans. Power Del.*, 2007, vol. 22 (4), 2065-2071